# EUROPEAN PATENT APPLICATION

(11) **EP 4 653 579 A1**
(43) Date of publication of application: **26.11.2025**
(21) Application number: 24774412.1
(22) Date of filing: 19.01.2024
(51) Int. Cl.: C25B 1/042, C25B 9/00, C25B 9/67, C25B 15/02, C25B 15/021, C25B 15/027

(54) **HYDROGEN PRODUCTION SYSTEM AND METHOD FOR OPERATING HYDROGEN PRODUCTION SYSTEM**

(30) Priority: 17.03.2023 JP 2023042839
(71) Applicant: Mitsubishi Heavy Industries, Ltd., Tokyo 100-8332 (JP)
(72) Inventor: MATAKE, Norihisa, Tokyo 100-8332 (JP); KOSAKA, Kenichiro, Tokyo 100-8332 (JP); IRIE, Hiroki, Tokyo 100-8332 (JP); KATO, Masayuki, Tokyo 100-8332 (JP)
(74) Representative: Hoffmann Eitle
(86) International application number: PCT/JP2024/001387
(87) International publication number: WO 2024/195266

(57) **Abstract**

A hydrogen production system is provided with: a solid oxide electrolysis cell (SOEC) for electrolyzing water vapor; a power supply device for applying a voltage equal to or higher than a thermoneutral voltage to the SOEC; and a water vapor generation device for generating at least part of the water vapor supplied to the SOEC by heating water using surplus heat of the SOEC.

## Description

### TECHNICAL FIELD

The present disclosure relates to a hydrogen production system and a method of operating the hydrogen production system.

The present application claims priority based on Japanese Patent Application No. 2023-042839 filed on March 17, 2023, the entire content of which is incorporated herein by reference.

### BACKGROUND ART

As a countermeasure against global warming, renewable energies such as solar power and wind power are expected to be introduced in large quantities in the future. Introducing large quantities of renewable energy requires a means of adjusting the gap between electricity supply and demand; a system has been proposed in which water is electrolyzed and stored as hydrogen when there is a surplus of electricity from renewable energy, and the stored hydrogen is used as fuel when there is a shortage of electricity. There are various methods for producing hydrogen by electrolysis of water, ranging from room temperature to high temperature. Among them, high-temperature steam electrolysis, which electrolyzes water vapor at temperatures of several hundred degrees or higher, is attracting attention as a highly efficient method for large-scale hydrogen production. Patent Document 1 describes a hydrogen production system that produces hydrogen by electrolyzing water vapor in a solid oxide electrolysis cell (SOEC). In this hydrogen production system, water vapor generated in a boiler is supplied to the SOEC.

### Citation List

### Patent Literature

Patent Document 1: JP7039504B

### SUMMARY

### Problems to be Solved

Generally, when water vapor to be supplied to the SOEC is generated in the boiler, a heat source external to the hydrogen production system is used as the heat source in the boiler. In such cases, the equipment and operating costs of the hydrogen production system are high. In particular, the issue of rising equipment costs for boilers and other facilities for generating water vapor becomes pronounced when the hydrogen production system is scaled up.

In view of the above, an object of at least one embodiment of the present disclosure is to provide a hydrogen production system that can reduce the equipment and operating costs, and a method of operating the hydrogen production system.

### Solution to the Problems

In order to achieve the above-mentioned object, a hydrogen production system according to the present disclosure is provided with: a solid oxide electrolysis cell (SOEC) for electrolyzing water vapor; a power supply device for applying a voltage equal to or higher than a thermoneutral voltage to the SOEC; and a water vapor generation device for generating at least part of the water vapor supplied to the SOEC by heating water using surplus heat of the SOEC.

### Advantageous Effects

With the hydrogen production system of the present disclosure, the amount of heat supplied from outside the hydrogen production system for generating water vapor can be reduced or eliminated by covering at least part of the heat required for generating water vapor with surplus heat generated during electrolysis of water vapor in the SOEC. This further reduces the need for additional equipment such as electric boilers and associated heat exchangers, which in turn reduces the equipment and operating costs of the hydrogen production system.

### BRIEF DESCRIPTION OF DRAWINGS

FIG. 1 is a schematic configuration diagram of a hydrogen production system according to Embodiment 1 of the present disclosure.
FIG. 2 is a schematic configuration diagram of a modification of the hydrogen production system according to Embodiment 1 of the present disclosure.
FIG. 3 is a schematic configuration diagram of another modification of the hydrogen production system according to Embodiment 1 of the present disclosure.
FIG. 4 is a schematic configuration diagram of still another modification of the hydrogen production system according to Embodiment 1 of the present disclosure.
FIG. 5 is a schematic configuration diagram of still another modification of the hydrogen production system according to Embodiment 1 of the present disclosure.
FIG. 6 is a schematic configuration diagram of a hydrogen production system according to Embodiment 2 of the present disclosure.
FIG. 7 is a graph schematically showing IV characteristics of the SOEC of the hydrogen production system according to Embodiment 2 of the present disclosure.
FIG. 8 is a schematic diagram of temperature distribution formed in the SOEC of the hydrogen production system according to Embodiment 2 of the present disclosure.
FIG. 9 is a flowchart of operation of the hydrogen production system according to Embodiment 2 of the present disclosure.
FIG. 10 is a schematic configuration diagram of a modification of the hydrogen production system according to Embodiment 2 of the present disclosure.
FIG. 11 is a schematic configuration diagram of another modification of the hydrogen production system according to Embodiment 2 of the present disclosure.
FIG. 12 is a schematic configuration diagram of still another modification of the hydrogen production system according to Embodiment 2 of the present disclosure.
FIG. 13 is a schematic configuration diagram of a hydrogen production system according to Embodiment 3 of the present disclosure.

### DETAILED DESCRIPTION

Hereinafter, a hydrogen production system according to embodiments of the present disclosure will be described with reference to the drawings. The embodiment to be described below indicates one aspect of the present disclosure, does not intend to limit the disclosure, and can optionally be modified within a range of a technical idea of the present disclosure.

### (Embodiment 1)

### <Configuration of hydrogen production system according to Embodiment 1 of present disclosure>

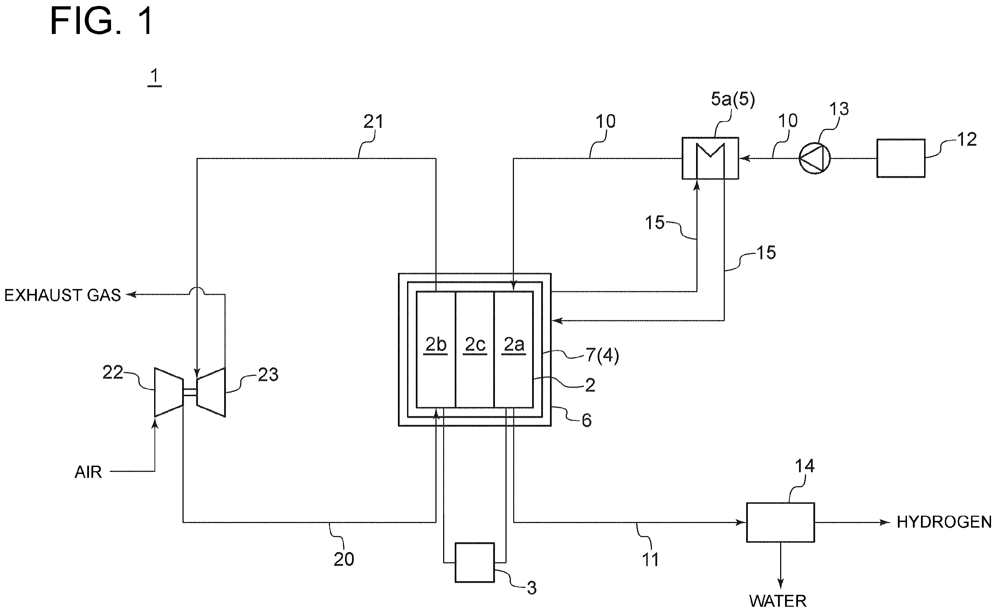

As shown in FIG. 1, a hydrogen production system 1 according to Embodiment 1 of the present disclosure is a system of a pressurized solid oxide electrolysis cell (pressurized SOEC) as an example, and includes a solid oxide electrolysis cell (SOEC) 2 for electrolyzing water vapor, a power supply device 3 for applying a voltage to the SOEC 2, a surplus heat recovery device 4 for recovering surplus heat of the SOEC 2 to a heat transfer medium, and a water vapor generation device 5 for generating water vapor supplied to the SOEC 2. The surplus heat will be described later. The SOEC 2 includes a hydrogen electrode 2a, an oxygen electrode 2b, and a solid electrolyte 2c disposed between the hydrogen electrode 2a and the oxygen electrode 2b. Although only one SOEC 2 is depicted in FIG. 1, multiple SOECs 2 may be contained in a housing 6. The power supply device 3 is configured to apply a voltage between the hydrogen electrode 2a and the oxygen electrode 2b.

The housing 6 may have a flow passage 7 through which a heat transfer medium flows to cool the SOEC 2 contained in the housing 6. The flow passage 7 may, for example, be a flow passage formed inside a wall that constitutes the housing 6, or it may be in the form of a jacket spaced from the outer peripheral surface of the housing 6. The heat transfer medium flowing through the flow passage 7 cools the SOEC 2 and thereby recovers the surplus heat from the SOEC 2, so the flow passage 7 constitutes the surplus heat recovery device 4.

The hydrogen electrode 2a is connected to a water vapor supply line 10 through which water vapor supplied to the hydrogen electrode 2a flows and to a water vapor discharge line 11 through which water vapor discharged from the hydrogen electrode 2a flows. The water vapor supply line 10 is connected to a water source 12, and a pump 13 is installed in the water vapor supply line 10. A boiler 5a, which is an example of the water vapor generation device 5, is disposed downstream of the pump 13 in the water vapor supply line 10. The water vapor discharge line 11 is provided with a condenser 14.

The water vapor supply line 10 is configured so that water supplied from the water source 12 by the pump 13 passes through the boiler 5a. A heat transfer medium line 15, which is configured to allow the heat transfer medium flowing through the flow passage 7 to flow out of the flow passage 7 and return into the flow passage 7, also passes through the boiler 5a. The boiler 5a is configured to exchange heat between the water flowing through the water vapor supply line 10 and the heat transfer medium flowing through the heat transfer medium line 15.

The oxygen electrode 2b is connected to a gas supply line 20 through which a gas containing oxygen, e.g., air, supplied to the oxygen electrode 2b flows and a gas discharge line 21 through which oxidizing exhaust gas discharged from the oxygen electrode 2b flows. The gas supply line 20 is provided with a compressor 22 for compressing the air, and the gas discharge line 21 is provided with a power turbine 23 driven by the exhaust gas from the oxygen electrode 2b.

### <Operation (operation method) of hydrogen production system according to Embodiment 1 of present disclosure>

Next, the operation (operation method) of the hydrogen production system 1 according to Embodiment 1 of the present disclosure will be described. Water from the water source 12 is caused to flow through the water vapor supply line 10 by the pump 13 and is heated in the boiler 5a by the operation described below to become pressurized water vapor. The pressurized water vapor generated in the boiler 5a flows through the water vapor supply line 10 and enters the hydrogen electrode 2a. On the other hand, air compressed by the compressor 22 flows through the gas supply line 20 and enters the oxygen electrode 2b.

When the power supply device 3 applies a voltage between the hydrogen electrode 2a and the oxygen electrode 2b, water vapor in the hydrogen electrode 2a is electrolyzed to produce hydrogen and oxygen ions (O²⁻) (see the following reaction formula (1)). The oxygen ions pass through the solid electrolyte 2c and become oxygen in the oxygen electrode 2b (see the following reaction formula (2)). Water vapor exiting the hydrogen electrode 2a contains hydrogen. The hydrogen-containing water vapor flows through the water vapor discharge line 11 into the condenser 14. In the condenser 14, the water vapor is condensed into water, resulting in gas-liquid separation of water and hydrogen. The water condensed in the condenser 14 is either treated as wastewater or reused for the water vapor supply, while the hydrogen is sent to a hydrogen consumption device or hydrogen storage device (not shown). Exhaust gas from the oxygen electrode 2b flows through the gas discharge line 21 into the power turbine 23 to drive the power turbine 23.

H₂O + 2e⁻ → H₂ + O₂ (1)

2O²⁻ → O₂ + 4e⁻ (2)

Since water electrolysis is an endothermic reaction, the amount of heat absorbed by the SOEC 2 increases as the current density increases. On the other hand, increasing the current density also increases the amount of heat generated due to internal resistance such as ohmic loss of the SOEC 2. The state in which both are in balance is the thermoneutral point. The voltage applied by the power supply device 3 to achieve such a thermoneutral point is the thermoneutral voltage, which is approximately 1.3 V, although it tends to increase slightly with increasing temperature. The voltage applied to the SOEC 2 from the power supply device 3 is the electrolytic voltage, which represents the average voltage of the SOEC 2. Lower electrolytic voltages are generally preferred to maintain high hydrogen conversion efficiency of the hydrogen production system 1.

In Embodiment 1, the voltage applied between the hydrogen electrode 2a and the oxygen electrode 2b from the power supply device 3 is higher than the thermoneutral voltage, preferably 0.05 V to 0.5 V higher than the thermoneutral voltage, and more preferably 0.05 V to 0.3 V higher. This generates surplus heat from the SOEC 2 equivalent to the applied voltage minus the thermoneutral voltage. This surplus heat generated is the aforementioned surplus heat. Therefore, while the hydrogen production system 1 is in operation, a heat transfer medium flows through the flow passage 7 to cool the SOEC 2 by the heat transfer medium. The surplus heat generated from the SOEC 2 is absorbed by the heat transfer medium. The heat transfer medium that has absorbed the surplus heat exits the flow passage 7 and circulates through the heat transfer medium line 15. The heat transfer medium circulating through the heat transfer medium line 15 is cooled by heat exchange in the boiler 5a with water flowing through the water vapor supply line 10 and returns to the flow passage 7 again to cool the SOEC 2. Meanwhile, the water heated by the heat exchange with the heat transfer medium evaporates to become water vapor, which flows into the hydrogen electrode 2a in the operation described above.

Thus, the amount of heat supplied from outside the hydrogen production system 1 for generating water vapor can be reduced or eliminated by covering at least part of the heat required for generating water vapor with surplus heat generated during electrolysis of water vapor in the SOEC 2. This further reduces the need for additional equipment such as electric boilers and associated heat exchangers, which in turn reduces the equipment and operating costs of the hydrogen production system 1.

### <Modification of hydrogen production system according to Embodiment 1 of present disclosure>

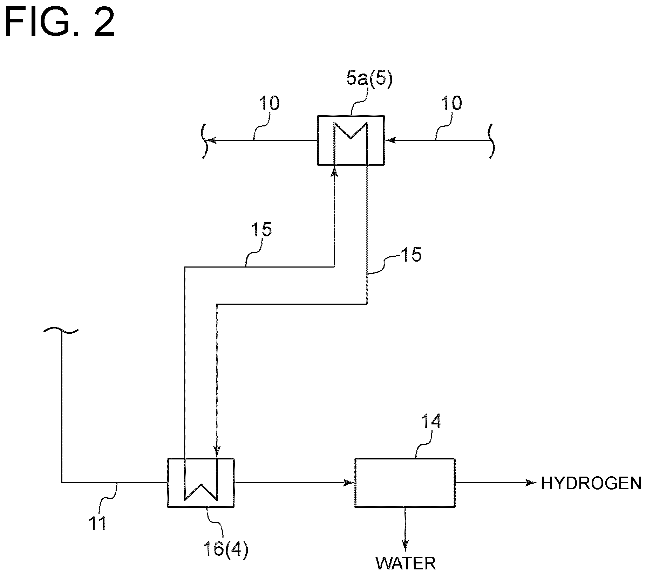

In Embodiment 1, the surplus heat recovery device 4 has been described as a flow passage formed inside a wall that constitutes the housing 6 containing the SOEC 2 or a jacket spaced from the outer peripheral surface of the housing 6, but it is not limited thereto. Instead of or in addition to the configuration including the flow passage 7, the surplus heat recovery device 4 may, for example, be a heat exchanger 16 installed upstream of the condenser 14 in the water vapor discharge line 11, as shown in FIG. 2. The heat exchanger 16 is configured so that the water vapor discharge line 11 and the heat transfer medium line 15 pass through it to allow heat exchange between the hydrogen-containing water vapor flowing through the water vapor discharge line 11 and the heat transfer medium flowing through the heat transfer medium line 15. Since the water vapor from the hydrogen electrode 2a has absorbed the surplus heat generated from the SOEC 2, the surplus heat generated from the SOEC 2 is transferred from the water vapor to the heat transfer medium through heat exchange between the water vapor and the heat transfer medium in the heat exchanger 16, and the heat transfer medium that has absorbed this surplus heat can generate water vapor through heat exchange with water in the boiler 5a.

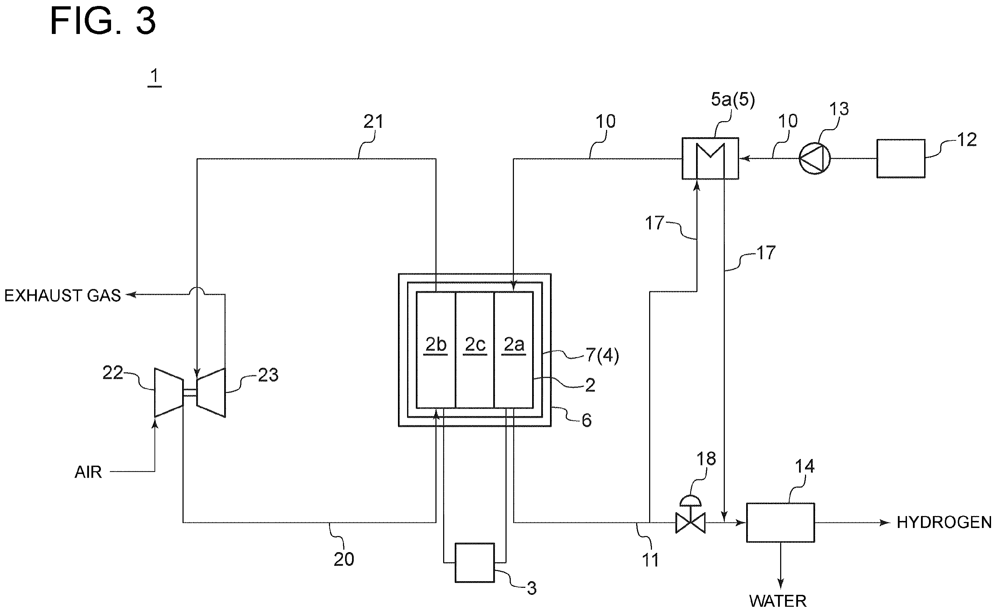

As shown in FIG. 3, without the heat exchanger 16, i.e., without the surplus heat recovery device 4, a bypass line 17, which branches off from the water vapor discharge line 11, passes through the boiler 5a, and rejoins the water vapor discharge line 11, may be provided so that water flowing through the water vapor supply line 10 and water vapor flowing through the water vapor discharge line 11 exchange heat to generate water vapor in the boiler 5a. Since the water vapor flowing through the water vapor discharge line 11 has absorbed the surplus heat generated from the SOEC 2, also in this embodiment, the boiler 5a uses the surplus heat of the SOEC 2 to generate water vapor. In this embodiment, a device for regulating the flow rate of water vapor entering the boiler 5a via the bypass line 17, for example, a flow control valve 18 may be provided in the water vapor discharge line 11 between the positions where the two ends of the bypass line 17 are connected to the water vapor discharge line 11. The flow control valve 18 may be installed in the bypass line 17, or instead of the flow control valve 18, a blower may be installed in the bypass line 17 as the device for regulating the flow rate of water vapor entering the boiler 5a.

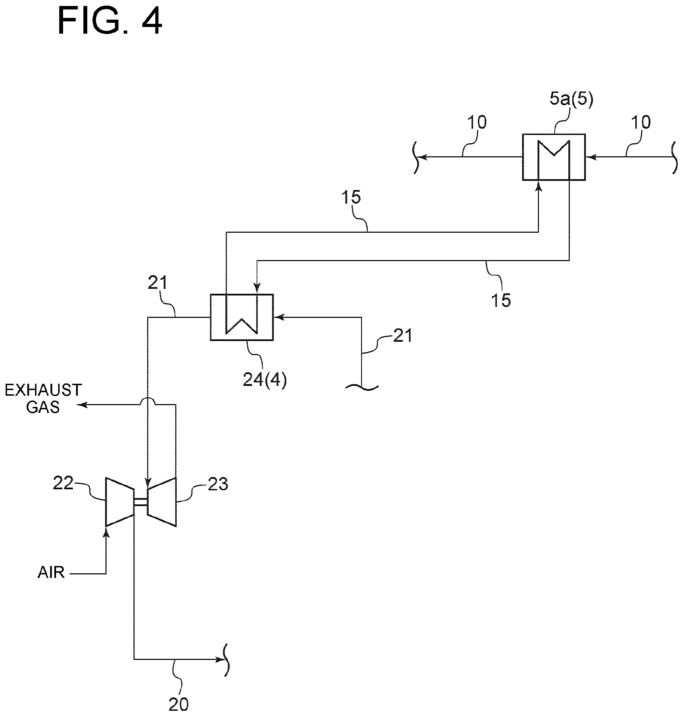

Instead of or in addition to at least one of the configuration including the flow passage 7 or the heat exchanger 16, the surplus heat recovery device 4 may, for example, be a heat exchanger 24 installed upstream of the power turbine 23 in the gas discharge line 21, as shown in FIG. 4. The heat exchanger 24 is configured so that the gas discharge line 21 and the heat transfer medium line 15 pass through it to allow heat exchange between the exhaust gas flowing through the gas discharge line 21 and the heat transfer medium flowing through the heat transfer medium line 15. Since the exhaust gas from the oxygen electrode 2b has absorbed the surplus heat generated from the SOEC 2, the surplus heat generated from the SOEC 2 is transferred from the water vapor to the heat transfer medium through heat exchange between the water vapor and the heat transfer medium in the heat exchanger 24, and the heat transfer medium that has absorbed this surplus heat can generate water vapor through heat exchange with water in the boiler 5a.

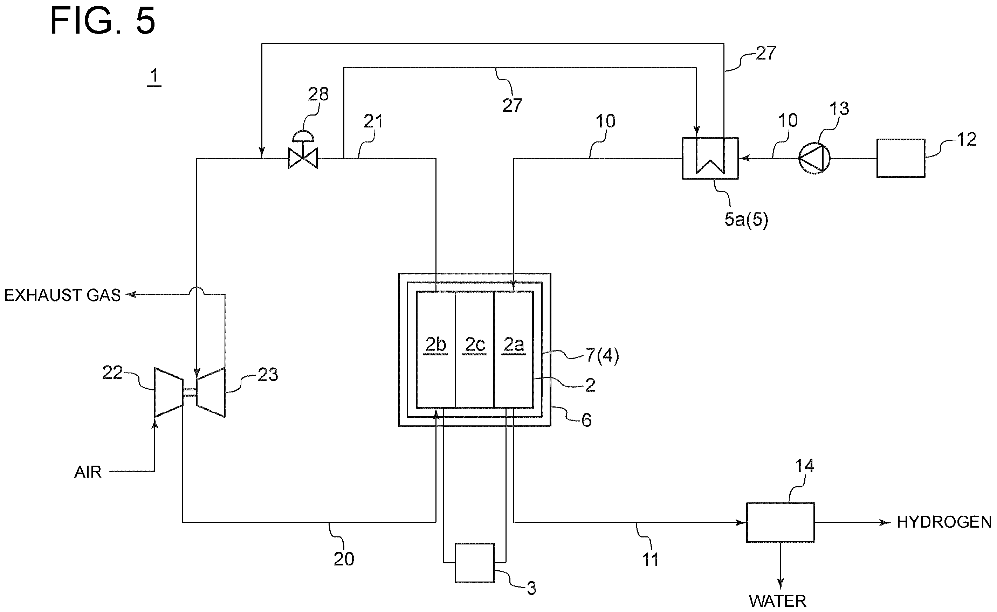

As shown in FIG. 5, without the heat exchanger 24, i.e., without the surplus heat recovery device 4, a bypass line 27, which branches off from the gas discharge line 21, passes through the boiler 5a, and rejoins the gas discharge line 21, may be provided so that water flowing through the water vapor supply line 10 and exhaust gas flowing through the gas discharge line 21 exchange heat to generate water vapor in the boiler 5a. Since the exhaust gas flowing through the gas discharge line 21 has absorbed the surplus heat generated from the SOEC 2, also in this embodiment, the boiler 5a uses the surplus heat of the SOEC 2 to generate water vapor. In this embodiment, a device for regulating the flow rate of exhaust gas entering the boiler 5a via the bypass line 27, for example, a flow control valve 28 may be provided in the gas discharge line 21 between the positions where the two ends of the bypass line 27 are connected to the gas discharge line 21. The flow control valve 28 may be installed in the bypass line 27, or instead of the flow control valve 28, a blower may be installed in the bypass line 27 as the device for regulating the flow rate of exhaust gas entering the boiler 5a.

As in the case where the surplus heat recovery device 4 includes the flow passage 7, if the SOEC 2 is cooled by the heat transfer medium, the increase in temperature of the SOEC 2 during operation of the hydrogen production system 1 can be suppressed. On the other hand, in the case of the modifications described above (FIGs. 2 to 5), without changing the configuration of the SOEC 2, the heat exchanger 16 is installed in the water vapor discharge line 11, or the heat exchanger 24 is installed in the gas discharge line 21, or water exchanges heat in the boiler 5a with water vapor from the hydrogen electrode 2a or exhaust gas from the oxygen electrode 2b; thus, the invention of the present disclosure can be easily applied to existing hydrogen production systems.

### (Embodiment 2)

Next, a hydrogen production system according to Embodiment 2 of the present disclosure will be described. The hydrogen production system according to Embodiment 2 is, as compared to Embodiment 1, capable of controlling the temperature of the SOEC 2 below the heat-resistant temperature and controlling the voltage applied to the SOEC 2. **In** Embodiment 2, the same constituent elements as those in Embodiment 1 are associated with the same reference signs and not described again in detail. The configurations of modifications described in Embodiment 1 can be applied to Embodiment 2 as long as there is no contradiction in configuration.

### <Configuration of hydrogen production system according to Embodiment 2 of present disclosure>

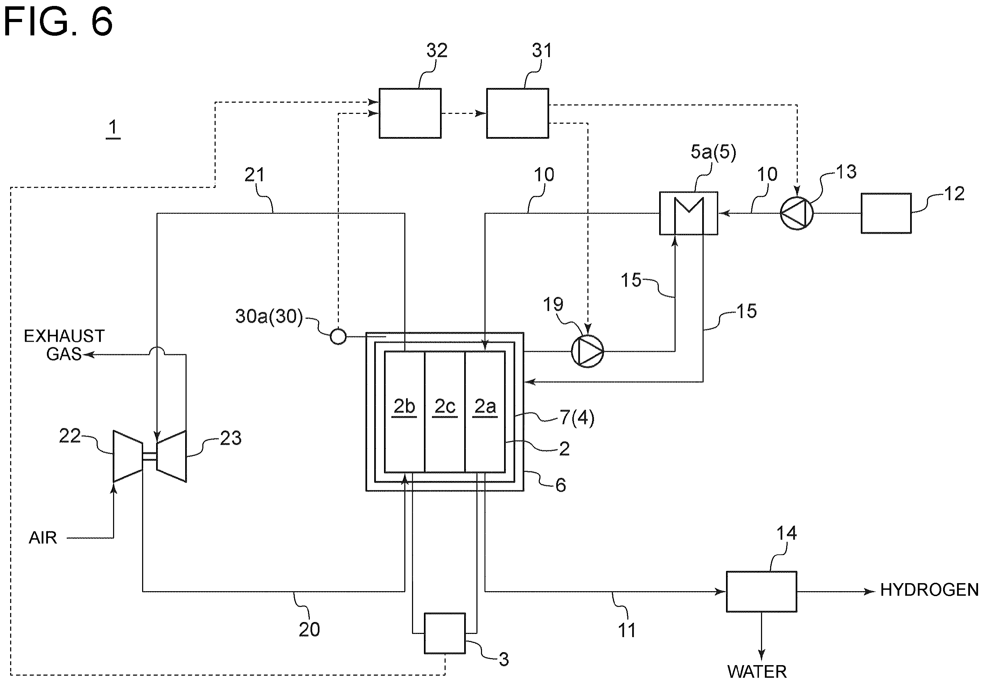

As shown in FIG. 6, the hydrogen production system 1 according to Embodiment 2 of the present disclosure is provided with a temperature detection device 30 for detecting the temperature of the SOEC 2, and a water vapor control device 31 for controlling at least one of the flow rate or temperature of the water vapor that flows through the hydrogen electrode 2a. In Embodiment 2, the temperature detection device 30 is described as a temperature sensor 30a installed in the housing 6, but it is only illustrative and may be a device that directly measures the temperature of the SOEC 2 or a device that estimates the temperature from various conditions. In Embodiment 2, the water vapor control device 31 for controlling the flow rate of the water vapor may be a device that adjusts the discharge amount of the pump 13. Such a device may, for example, be a device that adjusts the rotation speed or stroke of the pump 13, or, in the case of the configuration including a bypass line connected to the water vapor supply line 10 on the upstream and downstream sides of the pump 13 to bypass the pump 13 and a flow control valve installed in the bypass line, a device that controls the opening degree of the flow control valve. The water vapor control device 31 for controlling the temperature of the water vapor may be a device that regulates the flow rate of the heat transfer medium flowing through the heat transfer medium line 15. Such a device may, for example, be a device that adjusts the rotation speed or stroke of a flow-adjustable pump 19 installed in the heat transfer medium line 15, or, in the case of the configuration including a pump with a constant discharge flow in the heat transfer medium line 15, a bypass line bypassing this pump, and a flow control valve installed in the bypass line, a device that controls the opening degree of the flow control valve. The water vapor control device 31 may be equipped with either a configuration for controlling the flow rate of the water vapor, a configuration for controlling the temperature of the water vapor, or both configurations.

The temperature detection device 30 and the water vapor control device 31 may be directly connected to each other electrically or via a wireless communication line, etc., and the water vapor control device 31 may control at least one of the flow rate or temperature of the water vapor that flows through the hydrogen electrode 2a on the basis of a value detected by the temperature detection device 30. Alternatively, the temperature detection device 30 and the water vapor control device 31 may be connected to a control device 32 electrically or via a wireless communication line, etc. A value detected by the temperature detection device 30 may be transmitted to the control device 32, and the control device 32 may determine an appropriate value of at least one of the flow rate or temperature of the water vapor that flows through the hydrogen electrode 2a on the basis of the temperature of the SOEC 2, and may drive the water vapor control device 31 so that the determined value of the at least one of the flow rate or temperature is achieved. Other configurations are the same as in Embodiment 1.

The control device 32 includes, for example, a Central Processing Unit (CPU), a Random Access Memory (RAM), a Read Only Memory (ROM), a computer-readable storage medium, and the like. Then, a series of processes for realizing various functions is stored in the storage medium or the like in the form of a program, as an example. The CPU reads the program out to the RAM or the like and executes processing/calculation of information, thereby realizing the various functions. A configuration where the program is installed in the ROM or another storage medium in advance, a configuration where the program is provided in a state of being stored in the computer-readable storage medium, a configuration where the program is distributed via a wired or wireless communication means, etc., may be applied. The computer-readable storage medium may be a magnetic disk, a magneto-optical disk, a CD-ROM, a DVD-ROM, or a semiconductor memory.

### <Operation of hydrogen production system according to Embodiment 2 of present disclosure>

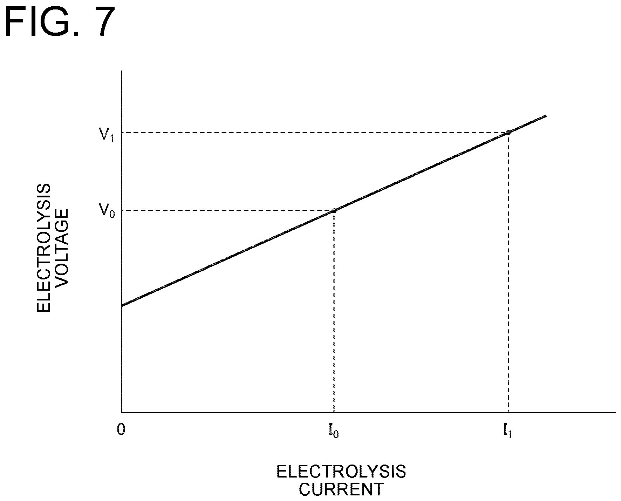

FIG. 7 is a graph schematically showing IV characteristics of the SOEC 2. The IV characteristics vary with, for example, the temperature distribution in the SOEC 2 and the degradation state of the SOEC 2, but the electrolytic current in the SOEC 2 and the electrolytic voltage applied to the SOEC 2 are roughly proportional to each other. When the SOEC 2 is operated at the thermoneutral point, if the electrolytic current at that point is defined as I₀, then the voltage V₀ obtained when the electrolytic current is I₀ on the IV characteristics is the thermoneutral voltage (about 1.3 V). When an electrolytic current I₁ higher than I₀ is applied based on the production amount of hydrogen (electrolytic current) required for the SOEC 2, the electrolytic voltage is V₁ on the IV characteristics of FIG. 7. In this way, when the SOEC 2 is operated under the conditions corresponding to the amount of electrolysis where the electrolytic current is I₁, the electrolytic voltage is V₁, which is higher than at the thermoneutral point, resulting in excess internal heat generation, which can be used as a heat source in the boiler 5a by adjusting the operating conditions of the SOEC 2 and using a heat transfer medium to extract the surplus heat to the outside. In the following description, the electrolytic voltage V₁ will be referred to as the set voltage. The electrolytic voltage refers to the average voltage of all entire electrolytic cells incorporated in the SOEC 2.

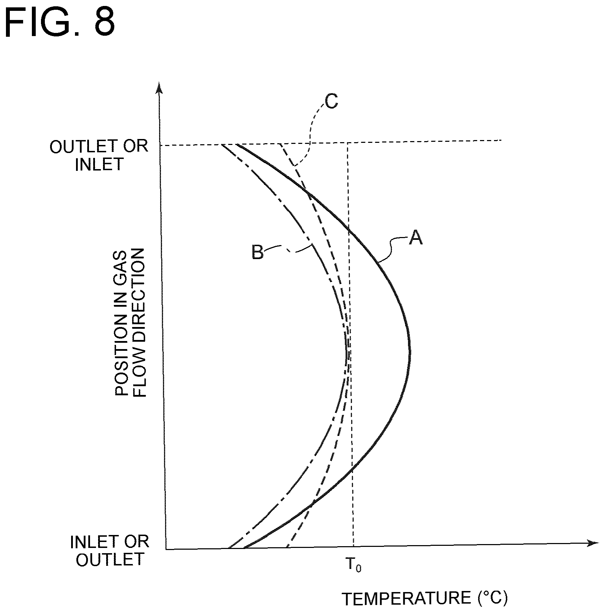

When the hydrogen production system 1 is driven by the operation described in Embodiment 1, a temperature distribution A is formed in the SOEC 2 with respect to the gas flow direction (water vapor or air flow direction) in the SOEC 2, as shown in FIG. 8. The temperature distribution A exhibits a tendency to rise in temperature toward the center along the gas flow direction of the SOEC 2, starting from the inlet and outlet for water vapor and air. If the electrolytic current is set to I₁, which is higher than the electrolytic current I₀ at the thermoneutral point, due to the increase in internal heat generation, the difference between the maximum temperature (e.g., the temperature near the center in the gas flow direction) and the minimum temperature (the temperature at the inlet and outlet) becomes larger as in the temperature distribution A, and the heat-resistant temperature T₀ of the SOEC 2 may be locally exceeded, posing a risk that the SOEC 2 may not be able to continue operation.

In contrast, if the temperature distribution A can be changed to temperature distribution B or C, where the difference between the maximum and minimum temperatures is smaller, without changing the electrolytic current I₁, it is possible to continue operating the SOEC 2 while ensuring the heat generation required to generate the amount of water vapor necessary for electrolysis, i.e., while maintaining the set voltage, and at the same time, it is possible to avoid the operating temperature of the SOEC 2 locally exceeding the heat-resistant temperature T₀. FIG. 8 schematically shows general characteristics of the change in temperature distribution inside the SOEC 2 with adjustment of the flow rate or temperature of the water vapor flowing into the hydrogen electrode 2a. When the flow rate of the water vapor flowing into the hydrogen electrode 2a increases, the temperature difference between the temperature at the inlet or outlet and the maximum temperature becomes smaller, i.e., the temperature distribution A changes to the temperature distribution C. When the temperature of the water vapor flowing into the hydrogen electrode 2a decreases, the temperature difference between the temperature at the inlet or outlet and the maximum temperature does not change much but the overall operating temperature decreases (the average temperature of the SOEC 2 decreases), i.e., the temperature distribution A changes to the temperature distribution B.

As an example of the operation for this purpose, for example, as shown in FIG. 6, if the control device 32 determines that the above-mentioned risk has occurred based on a detected value by the temperature sensor 30a, the control device 32 may drive the water vapor control device 31 to increase the flow rate of the water vapor into the hydrogen electrode 2a. The increase in the flow rate of the water vapor flowing into the hydrogen electrode 2a changes the temperature distribution formed in the SOEC 2 to the temperature distribution C (see FIG. 8), where the temperature difference between the maximum and minimum temperatures is small. This avoids a situation where the SOEC 2 locally exceeds the heat-resistant temperature T₀.

As another operation for this purpose, for example, if the control device 32 determines that the above-mentioned risk has occurred, the control device 32 may reduce the amount of heat exchange between the water vapor and water in the boiler 5a by decreasing the flow rate of the water vapor into the boiler 5a via the bypass line 17 shown in FIG. 3. This lowers the temperature of the water vapor generated by the boiler 5a. As the water vapor with a lowered temperature flows into the hydrogen electrode 2a, the temperature distribution formed in the SOEC 2 can be changed to the temperature distribution B (see FIG. 8), where the overall operating temperature decreases. This avoids a situation where the SOEC 2 locally exceeds the heat-resistant temperature T₀.

The operation for this purpose is not limited to controlling either the flow rate or temperature of the water vapor that flows through the hydrogen electrode 2a, but both may be controlled simultaneously or sequentially (regardless of which comes first or last).

Thus, by controlling at least one of the flow rate or temperature of the water vapor that flows through the hydrogen electrode 2a on the basis of the temperature of the SOEC 2, the temperature distribution in the SOEC 2 can be changed, and the maximum temperature can be lowered, so that it is possible to avoid a situation where the SOEC 2 locally exceeds the heat-resistant temperature T₀ while maintaining a constant electrolytic current in the SOEC 2.

Even if the local temperature can be controlled below the heat-resistant temperature T₀ by the above operation, if the average temperature of the SOEC 2 is lower than the assumed average temperature, the electrolytic voltage becomes higher than the set voltage, and the energy efficiency of the hydrogen production system 1 is expected to decrease (i.e., a state of excessive heat generation). In such cases, the operating temperature may be set below the heat-resistant temperature T₀, and the electrolytic voltage may be set to the set voltage by the following procedure.

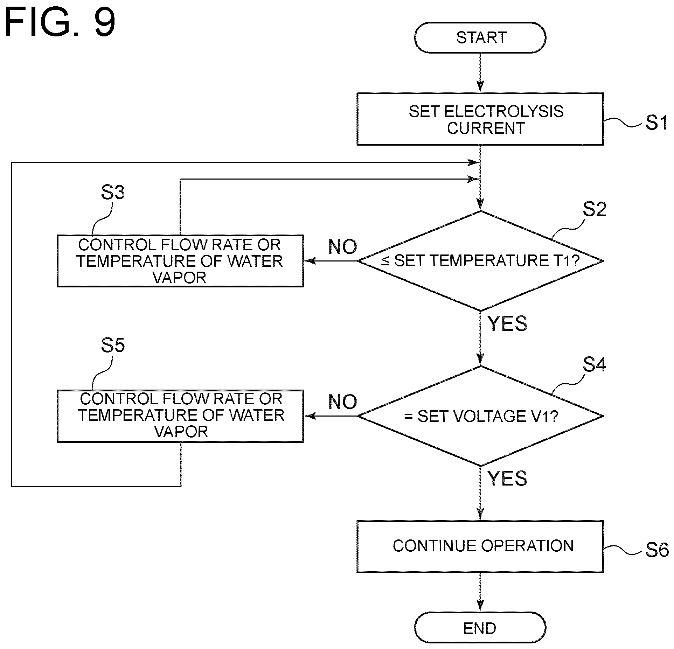

First, a set temperature T₁ is set in advance as a possible value detected by the temperature sensor 30a that may locally reach the heat-resistant temperature T₀ of the SOEC 2. As shown in the flowchart of FIG. 9, when the production amount of hydrogen (electrolytic current) is determined by an external command in step S1, it is judged whether the detected value by the temperature sensor 30a is equal to or lower than the set temperature T₁ under a given operating condition (step 2). If the detected value by the temperature sensor 30a exceeds the set temperature T₁, in step S3, at least one of the flow rate or temperature of the water vapor that flows through the hydrogen electrode 2a is controlled by the operation described above, and then return to step S2.

In step 2, if the detected value by the temperature sensor 30a is judged to be equal to or lower than the set temperature T₁, it is then judged whether the electrolytic voltage is equal to the set voltage V₁ in step S4. Since it is rare for the electrolytic voltage to perfectly match the set voltage V₁, the upper and lower limit voltages are determined with the set voltage V1 in between, and it is judged whether the detected value by the temperature sensor 30a is within the allowable range defined between the upper and lower limit voltages. If it is judged in step S4 that the detected value by the temperature sensor 30a is not within the allowable range of the set voltage V₁, then in step S5, at least one of the flow rate or temperature of the water vapor that flows through the hydrogen electrode 2a is adjusted again by the operation described above, and then return to step S2. If it is judged in step S4 that the detected value by the temperature sensor 30a is within the allowable range of the set voltage V₁, the operation is continued in that state (step 6). Steps S2 and S3 as well as steps S4 and S5 may be performed in sequence as described above, or they may be performed simultaneously if the characteristics of the SOEC 2 are known in advance.

### <Modification of hydrogen production system according to Embodiment 2 of present disclosure>

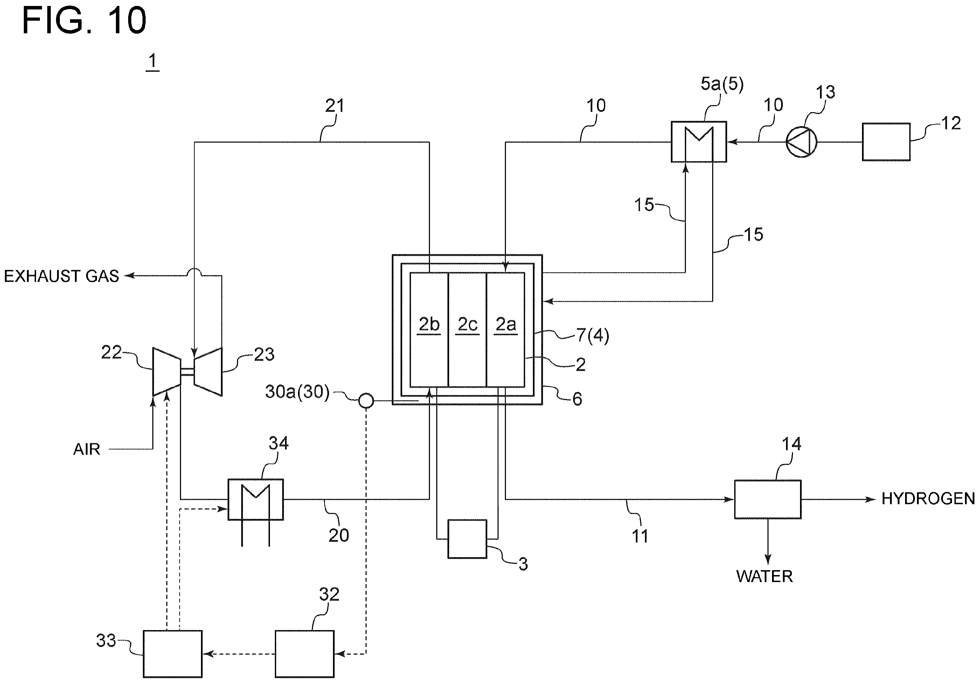

In Embodiment 2, at least one of the flow rate or temperature of the water vapor that flows through the hydrogen electrode 2a is controlled to lower the maximum temperature in the SOEC 2, but it is not limited to this embodiment, and at least one of the flow rate or temperature of the gas that flows through the oxygen electrode 2b may be controlled. The configuration for implementing this embodiment is shown in FIG. 10.

As shown in FIG. 10, the hydrogen production system 1 is provided with a temperature detection device 30 for detecting the temperature of the SOEC 2, and a gas control device 33 for controlling at least one of the flow rate or temperature of the gas that flows through the oxygen electrode 2b. The specific configuration of the temperature detection device 30 is the same as that described for the hydrogen production system 1 in FIG. 4. The gas control device 33 for controlling the flow rate of the gas may be a device that adjusts the discharge amount of the compressor 22, e.g., a device that adjusts the rotation speed or stroke of the compressor 22. The gas control device 33 for controlling the temperature of the gas may be a heat exchanger 34 installed in the gas supply line 20. The heat exchanger 34 is configured to allow heat exchange between the gas flowing through the gas supply line 20 and any heat transfer medium. For example, by controlling the flow rate of the heat transfer medium, the amount of heat exchange between the gas and the heat transfer medium can be changed to regulate the gas temperature. The gas control device 33 may be equipped with either a configuration for controlling the flow rate of the gas, a configuration for controlling the temperature of the gas, or both configurations.

In this modification, as in the operation described for the hydrogen production system 1 of FIG. 6, when the temperature distribution is changed to the temperature distribution C (see FIG. 8), where the temperature difference between the maximum and minimum temperatures in the SOEC 2 is small, the control device 32 drives the gas control device 33 to increase the flow rate of the gas flowing into the oxygen electrode 2b. When the temperature of the gas flowing into the oxygen electrode 2b is lowered to decrease the temperature of the overall temperature distribution in the SOEC 2, the control device 32 drives the gas control device 33 to maintain the flow rate of the heat transfer medium circulating through the heat exchanger 34 and increase the flow rate of the cold-side fluid in the heat exchanger 34 (e.g., the feed water flow to the boiler 5a). As a result, the temperature of the air flowing into the oxygen electrode 2b can be lowered, changing the temperature distribution formed in the SOEC 2 to the temperature distribution B (see FIG. 8), where the overall operating temperature decreases. Both the flow rate and temperature of the gas that flows through the oxygen electrode 2b may be controlled simultaneously or sequentially (regardless of which comes first or last).

Also in this modification, by controlling at least one of the flow rate or temperature of the gas that flows through the oxygen electrode 2b on the basis of the temperature of the SOEC 2, the temperature distribution in the SOEC 2 can be changed, and the maximum temperature can be lowered, so that it is possible to continue the electrolysis of water vapor at the set voltage while maintaining a constant electrolytic current in the SOEC 2, and at the same time, it is possible to avoid a situation where the SOEC 2 locally exceeds the heat-resistant temperature T₀. The control of at least one of the flow rate or temperature of the water vapor that flows through the hydrogen electrode 2a and the control of at least one of the flow rate or temperature of the gas that flows through the oxygen electrode 2b may be performed simultaneously.

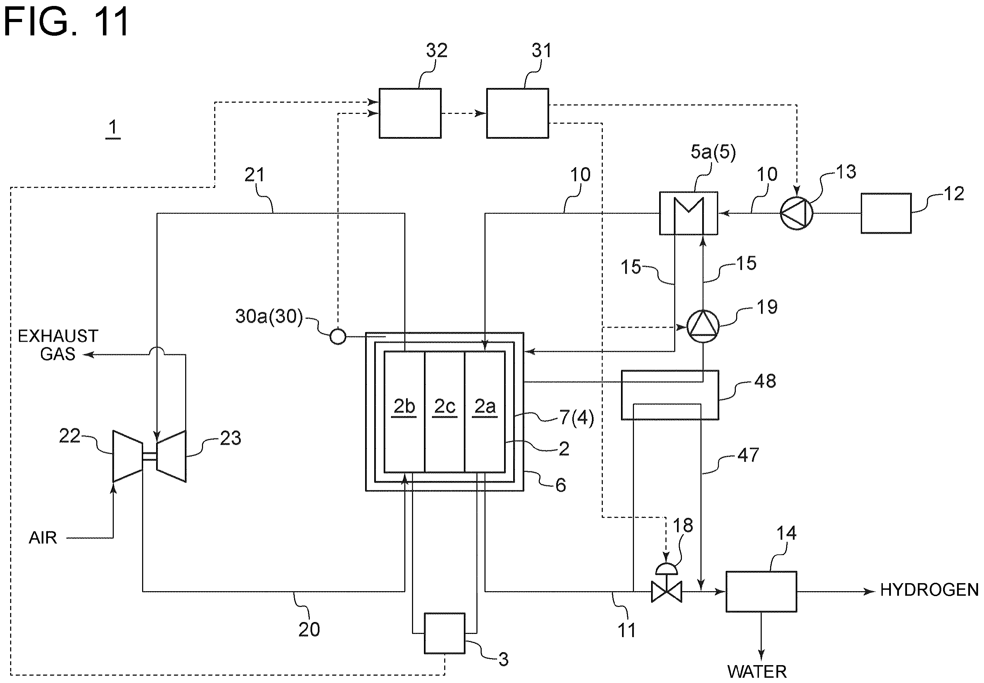

As shown in FIG. 11, a bypass line 47 branching off from the water vapor discharge line 11 and rejoining it, and a heat exchanger 48 allowing heat exchange between the water vapor flowing through the bypass line 47 and the heat transfer medium before it enters the boiler 5a may be provided. In this modification, to control the flow rate of the heat transfer medium flowing through the heat transfer medium line 15, for example, a pump 19 is installed in the heat transfer medium line 15, and to control the temperature of the heat transfer medium supplied to the boiler 5a, for example, a flow control valve 18 is installed in the water vapor discharge line 11 between the positions where the two ends of the bypass line 17 are connected to the water vapor discharge line 11. By controlling the circulation flow rate of the heat transfer medium and the temperature of the heat transfer medium supplied to the boiler 5a by the pump 19 and the heat exchanger 48, the factors that directly affect the electrolysis performance, namely the flow rate and temperature of the water vapor supplied to the hydrogen electrode 2a, can be set to predetermined values while maintaining the operating temperature of the SOEC 2 within the allowable range. This enables stable operation in response to changes in the required electrolytic current and the performance of the SOEC 2.

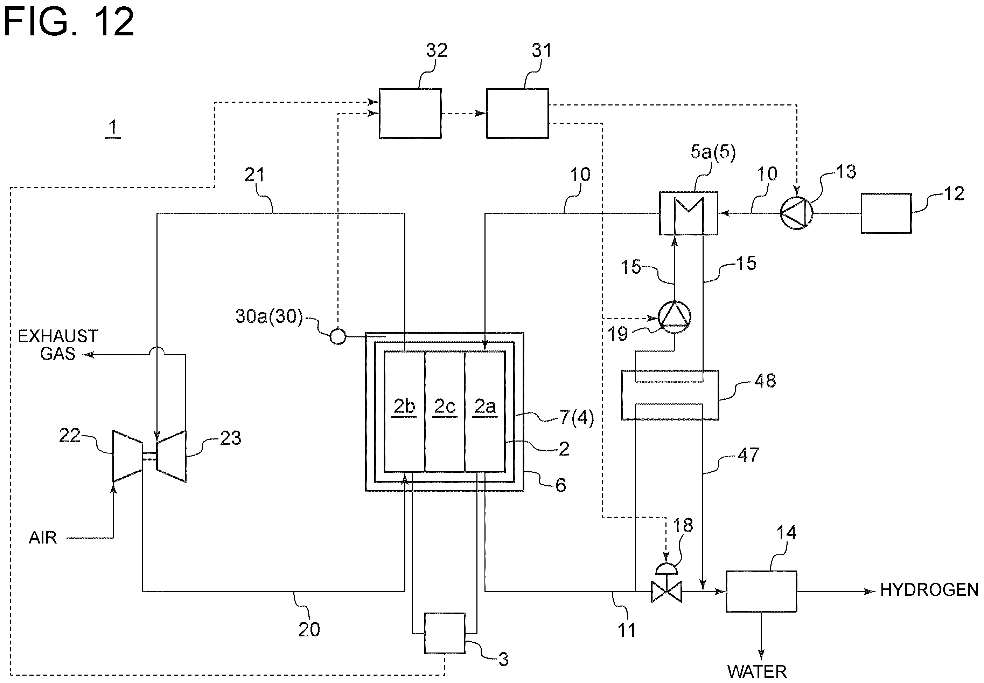

The modification shown in FIG. 12 is changed from the modification shown in FIG. 11 in that the heat transfer medium line 15 is configured to pass through the heat exchanger 48 so that the heat transfer medium circulates between the boiler 5a and the heat exchanger 48, instead of circulating between the surplus heat recovery device 4 and the boiler 5a. This modification does not require any changes to the configuration of the SOEC 2, and the operating temperature of the SOEC 2 can be adjusted within the allowable range by adjusting the flow rate and temperature of the water vapor supplied to the hydrogen electrode 2a, so the invention of the present disclosure can easily be applied to existing hydrogen production systems 1 using SOECs 2.

The modifications illustrated in FIGs. 11 and 12 are both configured to collect the surplus heat from the water vapor flowing through the water vapor discharge line 11 or release it outside the system, but they can also be configured in the same way to collect the surplus heat from the exhaust gas flowing through the gas discharge line 21 or release it outside the system.

### (Embodiment 3)

Next, a hydrogen production system according to Embodiment 3 of the present disclosure will be described. The hydrogen production system according to Embodiment 3 can, in contrast to Embodiment 2, respond to aging degradation of the SOEC 2. In Embodiment 3, the same constituent elements as those in Embodiment 2 are associated with the same reference signs and not described again in detail. The configurations of modifications described in each of Embodiments 1 and 2 can be applied to Embodiment 3 as long as there is no contradiction in configuration.

### <Configuration of hydrogen production system according to Embodiment 3 of present disclosure>

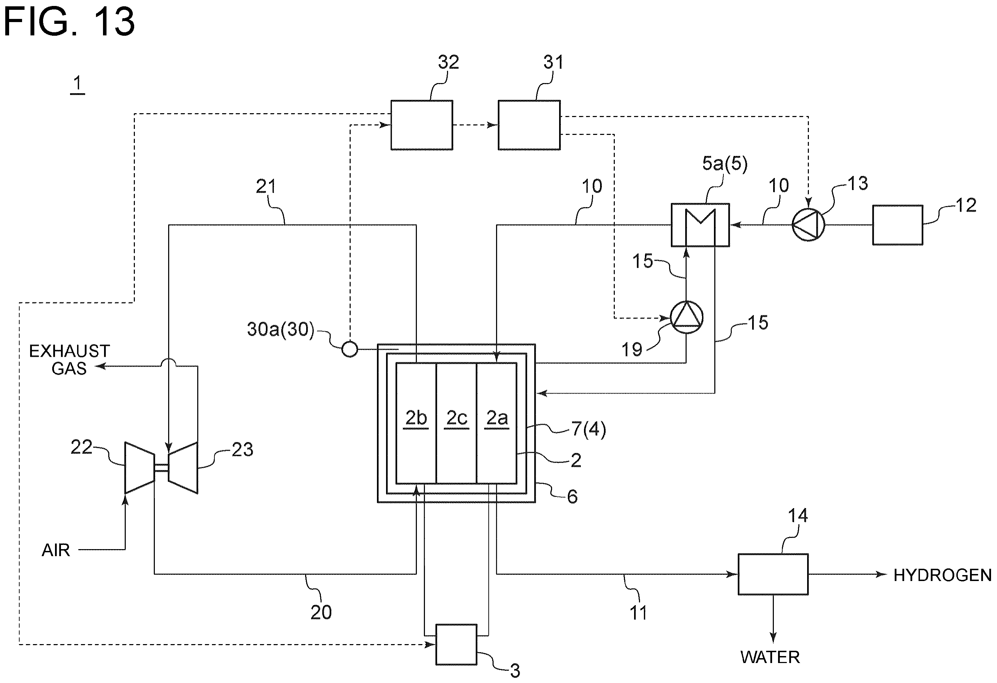

As shown in FIG. 13, the hydrogen production system 1 according to Embodiment 3 of the present disclosure is provided with a control device 32, which is a current value adjustment device for adjusting a current value that flows through the SOEC 2, and the control device 32 is connected to the power supply device 3 electrically or via a wireless communication line, etc. The configuration is otherwise the same as that of the Embodiment 2.

### <Operation of hydrogen production system according to Embodiment 3 of present disclosure>

The amount of heat generated from the SOEC 2 increases from the initial period of operation because the internal resistance of the SOEC 2 rises as the internal electrical components deteriorate due to continuous use. In this case, the maximum temperature in the SOEC 2 can be lowered within the design range of each component by the operation of Embodiment 2, but depending on the degree of degradation of the SOEC 2, the risk of the maximum temperature reaching the heat-resistant temperature of the SOEC 2 may not be resolved, and even if this condition is resolved, the electrolytic voltage may be higher than the set voltage, resulting in a decrease in hydrogen conversion efficiency. In such cases, the control device 32 reduces the current supplied to the SOEC 2 on the basis of a value detected by the temperature sensor 30a. As a result, although the amount of electrolysis in the SOEC 2 decreases, the amount of heat generated decreases, and the temperature in the SOEC 2 decreases. This allows the maximum temperature in the SOEC 2 to remain below the heat-resistant temperature and the electrolytic voltage to be lowered to the set voltage, maintaining the hydrogen conversion efficiency at the same level as at the start of electrolysis (before the internal resistance rises).

Further, when the electrolytic voltage becomes higher than the initial set voltage due to aging degradation of the SOEC 2, the electrolytic voltage can be lowered to the set voltage by reducing the current supplied to the SOEC 2, so that the lifetime of the SOEC 2 can be extended.

### <Modification of hydrogen production system according to Embodiment 3 of present disclosure>

Embodiment 3 allows for adjustment of the current value in the configuration shown in FIG. 6 of Embodiment 2, but such adjustability of the current value may also apply to each of the configurations shown in FIGs. 10 to 12, which are modifications of Embodiment 2.

The contents described in the above embodiments would be understood as follows, for instance.
[1] A hydrogen production system according to an aspect is provided with: a solid oxide electrolysis cell (SOEC) (2) for electrolyzing water vapor; a power supply device (3) for applying a voltage equal to or higher than a thermoneutral voltage to the SOEC (2); and a water vapor generation device (5) for generating at least part of the water vapor supplied to the SOEC (2) by heating water using surplus heat of the SOEC (2).
   With the hydrogen production system of the present disclosure, the amount of heat supplied from outside the hydrogen production system for generating water vapor can be reduced or eliminated by covering at least part of the heat required for generating water vapor with surplus heat generated during electrolysis of water vapor in the SOEC. This further reduces the need for additional equipment such as electric boilers and associated heat exchangers, which in turn reduces the equipment and operating costs of the hydrogen production system.
[2] A hydrogen production system according to another aspect is the hydrogen production system of [1], in which the voltage is 0.05 V to 0.5 V higher than the thermoneutral voltage.
   With this configuration, the SOEC is over-supplied with just enough electricity to match the heat required for the generation of water vapor, thereby reducing the increase in power consumption in the hydrogen production system.
[3] A hydrogen production system according to still another aspect is the hydrogen production system of [1] or [2], including a surplus heat recovery device (4) for recovering the surplus heat of the SOEC (2) to a heat transfer medium. The water vapor generation device (5) is configured to generate at least part of the water vapor supplied to the SOEC (2) by heat exchange between the heat transfer medium and the water.
   With this configuration, the amount of heat supplied from outside the hydrogen production system for generating water vapor can be reduced or eliminated by covering at least part of the heat required for generating water vapor with surplus heat generated during electrolysis of water vapor in the SOEC. This further reduces the need for additional equipment such as electric boilers and associated heat exchangers, which in turn reduces the equipment and operating costs of the hydrogen production system.
[4] A hydrogen production system according to still another aspect is the hydrogen production system of [3], in which the surplus heat recovery device (4) includes a flow passage (7) through which the heat transfer medium for cooling the SOEC (2) flows.
   With this configuration, the SOEC is cooled by the heat transfer medium, which prevents the temperature of the SOEC from rising during operation of the hydrogen production system.
[5] A hydrogen production system according to still another aspect is the hydrogen production system of [3], in which the SOEC (2) includes a hydrogen electrode (2a) into which the water vapor flows. The surplus heat recovery device (4) includes a heat exchanger (16) for heat exchange between water vapor from the hydrogen electrode (2a) and the heat transfer medium.
   With this configuration, without changing the configuration of the SOEC, the heat exchanger is installed in the water vapor discharge line, through which the water vapor from the hydrogen electrode flows; thus, the invention of the present disclosure can be easily applied to existing hydrogen production systems using SOECs.
[6] A hydrogen production system according to still another aspect is the hydrogen production system of [3], in which the SOEC (2) includes an oxygen electrode (2b) into which a gas containing oxygen flows. The surplus heat recovery device (4) includes a heat exchanger (24) for heat exchange between oxidizing exhaust gas from the oxygen electrode (2b) and the heat transfer medium.
   With this configuration, without changing the configuration of the SOEC, the heat exchanger is installed in the gas discharge line, through which the exhaust gas from the oxygen electrode flows; thus, the invention of the present disclosure can be easily applied to existing hydrogen production systems using SOECs.
[7] A hydrogen production system according to still another aspect is the hydrogen production system of [1] or [2], in which the SOEC (2) includes a hydrogen electrode (2a) into which the water vapor flows and an oxygen electrode (2b) into which a gas containing oxygen flows. The water vapor generation device (5) is configured to generate at least part of the water vapor supplied to the SOEC (2) by heat exchange between the water and water vapor from the hydrogen electrode (2a) or exhaust gas from the oxygen electrode (2b).
   With this configuration, since the configuration of the SOEC does not need to be changed, the invention of the present disclosure can be easily applied to existing hydrogen production systems using SOECs.
[8] A hydrogen production system according to still another aspect is the hydrogen production system of [5], including: a temperature detection device (30) for detecting a temperature of the SOEC (2); and a water vapor control device (31) for controlling at least one of a flow rate or a temperature of the water vapor that flows through the hydrogen electrode (2a).
   With this configuration, by controlling at least one of the flow rate or temperature of the water vapor flowing through the hydrogen electrode on the basis of the temperature of the SOEC, the temperature distribution in the SOEC can be adjusted, and the voltage applied to the SOEC can be controlled to the set voltage, while the temperature of the SOEC can be controlled below the heat-resistant temperature.
[9] A hydrogen production system according to still another aspect is the hydrogen production system of [8], including a current value adjustment device (control device 32) for adjusting a current value that flows through the SOEC (2).
   With this configuration, when the electrolytic voltage becomes higher than the set voltage due to aging degradation of the SOEC, the electrolytic voltage can be lowered to the set voltage by reducing the current supplied to the SOEC 2.
[10] A hydrogen production system according to still another aspect is the hydrogen production system of [6], including: a temperature detection device (30) for detecting a temperature of the SOEC (2); and a gas control device (33) for controlling at least one of a flow rate or a temperature of the gas that flows through the oxygen electrode (2b).
   With this configuration, by controlling at least one of the flow rate or temperature of the gas flowing through the oxygen electrode on the basis of the temperature of the SOEC, the temperature distribution in the SOEC can be adjusted, and the voltage applied to the SOEC can be controlled to the set voltage, while the temperature of the SOEC can be controlled below the heat-resistant temperature.
[11] A hydrogen production system according to still another aspect is the hydrogen production system of [10], including a current value adjustment device (control device 32) for adjusting a current value that flows through the SOEC (2).
   With this configuration, when the electrolytic voltage becomes higher than the set voltage due to aging degradation of the SOEC, the electrolytic voltage can be lowered to the set voltage by reducing the current supplied to the SOEC 2.
[12] A hydrogen production system according to still another aspect is the hydrogen production system of [7], including a temperature detection device (30) for detecting a temperature of the SOEC (2); and a water vapor control device (31) for controlling at least one of a flow rate or a temperature of the water vapor that flows through the hydrogen electrode (2a); or a gas control device (33) for controlling at least one of a flow rate or a temperature of the gas that flows into the oxygen electrode (2b).
   With this configuration, by controlling at least one of the flow rate or temperature of the water vapor flowing through the hydrogen electrode or at least one of the flow rate or temperature of the gas flowing through the oxygen electrode on the basis of the temperature of the SOEC, the temperature distribution in the SOEC can be adjusted, and the voltage applied to the SOEC can be controlled to the set voltage, while the temperature of the SOEC can be controlled below the heat-resistant temperature.
[13] A hydrogen production system according to still another aspect is the hydrogen production system of [12], including a current value adjustment device (control device 32) for adjusting a current value that flows through the SOEC (2).
   With this configuration, when the electrolytic voltage becomes higher than the set voltage due to aging degradation of the SOEC, the electrolytic voltage can be lowered to the set voltage by reducing the current supplied to the SOEC 2.
[14] A method of operating a hydrogen production system according to an aspect is a method of operating the hydrogen production system (1) of [8], including controlling at least one of the flow rate or the temperature of the water vapor that flows through the hydrogen electrode (2a) by the water vapor control device (31), on the basis of a detected value by the temperature detection device (30).
   With this operation method, by controlling at least one of the flow rate or temperature of the water vapor flowing through the hydrogen electrode on the basis of the temperature of the SOEC, the temperature distribution in the SOEC can be adjusted, and the voltage applied to the SOEC can be controlled to the set voltage, while the temperature of the SOEC can be controlled below the heat-resistant temperature.
[15] A method of operating a hydrogen production system according to an aspect is a method of operating the hydrogen production system (1) of [10], including controlling at least one of the flow rate or the temperature of the gas that flows through the oxygen electrode (2b) by the gas control device (33), on the basis of a detected value by the temperature detection device (30).
   With this configuration, by controlling at least one of the flow rate or temperature of the gas flowing through the oxygen electrode on the basis of the temperature of the SOEC, the temperature distribution in the SOEC can be adjusted, and the voltage applied to the SOEC can be controlled to the set voltage, while the temperature of the SOEC can be controlled below the heat-resistant temperature.
[16] A method of operating a hydrogen production system according to an aspect is a method of operating the hydrogen production system (1) of [12], including controlling at least one of the flow rate or the temperature of the water vapor that flows through the hydrogen electrode (2a) or at least one of the flow rate or the temperature of the gas that flows into the oxygen electrode (2b) by the water vapor control device (31) or the gas control device (33), on the basis of a detected value by the temperature detection device (30).
   With this operation method, by controlling at least one of the flow rate or temperature of the water vapor flowing through the hydrogen electrode or at least one of the flow rate or temperature of the gas flowing through the oxygen electrode on the basis of the temperature of the SOEC, the temperature distribution in the SOEC can be adjusted, and the voltage applied to the SOEC can be controlled to the set voltage, while the temperature of the SOEC can be controlled below the heat-resistant temperature.
[17] A method of operating a hydrogen production system according to another aspect is a method of operating the hydrogen production system (1) of [13], including adjusting the current value that flows through the SOEC (2) by the current value adjustment device (control device 32), on the basis of a detected value by the temperature detection device (30).

With this operation method, when the electrolytic voltage becomes higher than the set voltage due to aging degradation of the SOEC, the electrolytic voltage can be lowered to the set voltage by reducing the current supplied to the SOEC 2.

### Reference Signs List

- 1: Hydrogen production system
- 2: Solid oxide electrolysis cell (SOEC)
- 2a: Hydrogen electrode
- 2b: Oxygen electrode
- 3: Power supply device
- 4: Surplus heat recovery device
- 5: Water vapor generation device
- 7: Flow passage
- 16: Heat exchanger
- 24: Heat exchanger
- 30: Temperature detection device
- 31: Water vapor control device
- 32: Control device (Current value adjustment device)
- 33: Gas control device

## Claims

1. A hydrogen production system, comprising:
a solid oxide electrolysis cell (SOEC) for electrolyzing water vapor;
a power supply device for applying a voltage equal to or higher than a thermoneutral voltage to the SOEC; and
a water vapor generation device for generating at least part of the water vapor supplied to the SOEC by heating water using surplus heat of the SOEC.

2. The hydrogen production system according to claim 1,
wherein the voltage is 0.05 V to 0.5 V higher than the thermoneutral voltage.

3. The hydrogen production system according to claim 1 or 2, comprising a surplus heat recovery device for recovering the surplus heat of the SOEC to a heat transfer medium,
wherein the water vapor generation device is configured to generate at least part of the water vapor supplied to the SOEC by heat exchange between the heat transfer medium and the water.

4. The hydrogen production system according to claim 3,
wherein the surplus heat recovery device includes a flow passage through which the heat transfer medium for cooling the SOEC flows.

5. The hydrogen production system according to claim 3,
wherein the SOEC includes a hydrogen electrode into which the water vapor flows, and
wherein the surplus heat recovery device includes a heat exchanger for heat exchange between water vapor from the hydrogen electrode and the heat transfer medium.

6. The hydrogen production system according to claim 3,
wherein the SOEC includes an oxygen electrode into which a gas containing oxygen flows, and
wherein the surplus heat recovery device includes a heat exchanger for heat exchange between oxidizing exhaust gas from the oxygen electrode and the heat transfer medium.

7. The hydrogen production system according to claim 1 or 2,
wherein the SOEC includes a hydrogen electrode into which the water vapor flows and an oxygen electrode into which a gas containing oxygen flows, and
wherein the water vapor generation device is configured to generate at least part of the water vapor supplied to the SOEC by heat exchange between the water and water vapor from the hydrogen electrode or exhaust gas from the oxygen electrode.

8. The hydrogen production system according to claim 5, comprising:
a temperature detection device for detecting a temperature of the SOEC; and
a water vapor control device for controlling at least one of a flow rate or a temperature of the water vapor that flows through the hydrogen electrode.

9. The hydrogen production system according to claim 8, comprising a current value adjustment device for adjusting a current value that flows through the SOEC.

10. The hydrogen production system according to claim 6, comprising:
a temperature detection device for detecting a temperature of the SOEC; and
a gas control device for controlling at least one of a flow rate or a temperature of the gas that flows through the oxygen electrode.

11. The hydrogen production system according to claim 10, comprising a current value adjustment device for adjusting a current value that flows through the SOEC.

12. The hydrogen production system according to claim 7, comprising:
a temperature detection device for detecting a temperature of the SOEC; and
a water vapor control device for controlling at least one of a flow rate or a temperature of the water vapor that flows through the hydrogen electrode; or a gas control device for controlling at least one of a flow rate or a temperature of the gas that flows into the oxygen electrode.

13. The hydrogen production system according to claim 12, comprising a current value adjustment device for adjusting a current value that flows through the SOEC.

14. A method of operating the hydrogen production system according to claim 8, comprising controlling at least one of the flow rate or the temperature of the water vapor that flows through the hydrogen electrode by the water vapor control device, on the basis of a detected value by the temperature detection device.

15. A method of operating the hydrogen production system according to claim 10, comprising controlling at least one of the flow rate or the temperature of the gas that flows through the oxygen electrode by the gas control device, on the basis of a detected value by the temperature detection device.

16. A method of operating the hydrogen production system according to claim 12, comprising controlling at least one of the flow rate or the temperature of the water vapor that flows through the hydrogen electrode or at least one of the flow rate or the temperature of the gas that flows into the oxygen electrode by the water vapor control device or the gas control device, on the basis of a detected value by the temperature detection device.

17. A method of operating the hydrogen production system according to claim 13, comprising adjusting the current value that flows through the SOEC by the current value adjustment device, on the basis of a detected value by the temperature detection device.
